# EUROPEAN PATENT SPECIFICATION

(11) **EP 1 950 669 B1**
(45) Date of publication and mention of the grant of the patent: **06.07.2011**
(21) Application number: 08006817.4
(22) Date of filing: 16.05.2006
(51) Int. Cl.: G06F 17/27, G06F 3/023

(54) **Device incorporating improved text input mechanism using the context of the input**
Vorrichtung mit verbessertem Texteingabemechanismus mittels des Kontextes der Eingabe
Dispositif incorporant un mécanisme amélioré de saisie de texte utilisant le contexte du texte

(30) Priority: 18.05.2005 US 131867
(43) Date of publication of application: 30.07.2008
(62) Divisional of application: 06010096.3
(73) Proprietor: "Neuer Wall" Treuhand GmbH, 20457 Hamburg (DE)
(72) Inventor: Assadollahi, Ramin, 80333 München (DE)
(74) Representative: Münzer, Marc Eric

(56) References cited:
- WO-A-2005/036413
- US-A- 5 953 541
- SAM A. INVERSO, NICK HAWES, JOHN KELLEHER, REBECCA ALLEN AND KEN HAASE: "Think And Spell: Context-Sensitive Predictive Text for an Ambiguous Keyboard Brain-Computer Interface Speller" BIOMEDIZINISCHE TECHNIK, [Online] vol. 49, no. 1, September 2004 (2004-09), XP002398643 Retrieved from the Internet: URL:http://www.cs.bham.ac.uk/~nah/bibitem. php?key=inverso04think> [retrieved on 2006-09-12]
- TOM STOCKY, ALEXANDER FAABORG, HENRY LIEBERMAN: "A Commonsense Approach to Predictive Text Entry" PROCEEDINGS OF CONFERENCE ON HUMAN FACTORS IN COMPUTING SYSTEMS, [Online] 24 April 2004 (2004-04-24), XP002398644 Vienna, Austria Retrieved from the Internet: URL:http://agents.media.mit.edu/projects/t extentry/CHI04_textEntry.pdf> [retrieved on 2006-09-12]

## Description

### Field of the Invention

The present invention relates to a device incorporating an improved text input mechanism, a method for improved text input and, in an arrangement, a computer program for performing the method. More particularly, the present invention relates to a device such as a personal digital assistant or cellular telephone which incorporates a method for contextual prediction of the next word of text to be input. The method of the present invention minimizes the number of keystrokes necessary to input text.

### Background of the invention

The use of miniature computers such as personal digital assistants (PDA) and cellular devices capable of text messaging has become increasingly popular. Such miniature devices include correspondingly miniature sized input mechanisms. Typically PDA's and the like utilize a miniature keyboard or a multi-tap data entry mechanism. The miniature size of the input mechanism makes it impractical to enter large amounts of text, and it is desirable to minimize the number of keystrokes necessary to enter text.

W02005/036413 describes a scheme where an entire word that a user wants to enter is predicted based on context.

Other prior approaches for minimizing the number of keystrokes have focused on so-called disambiguating methods in which the system refines its guess of the text being entered as the user enters each letter of text. U.S. patent numbers 5,818,437, 5,953,541 and U.S. patent publication numbers 20020152203, 20020163504, and 20020126097 are representative of the state of the prior art.

The prior art approach is akin to thumbing through a dictionary. The system "flips" to the appropriate section of the dictionary once the initial letter is entered, and displays words beginning with the initial letter. Due to limitations in the size of the display, only the first n words are displayed. If the desired word happens to occur within the first n words then the user may select the desired word from the list of n words.

If the desired word does not appear, then the user enters the second letter, whereupon the system displays words beginning with the first two letters. If the desired word occurs within the displayed list of n words then the user may select the desired word from the list.

If the desired word does not appear, then the user then enters the third letter, whereupon the system displays words beginning with the first three letters. The user continues to enter letters until either the desired word is displayed in the list of n words or the word is fully entered.

The aforementioned approach has not sufficiently reduced the number of keystrokes. Accordingly, what is needed is an improved method for reducing the number of keystrokes necessary to enter text.

### Summary of the Invention

Disclosed is a device incorporating a predictive text entry mechanism, a predictive text input method and a computer program for performing the method. The device includes a display screen for displaying m-words of data, a text entry device for entering data, a processor receiving data from the text entry device and causing it to be displayed on the display screen, wherein upon activation said processor initializes a precursor to a predefined value. The device is provided with a non-volatile memory storing a dictionary containing a plurality of entries, each such entry including an index, a candidate word, and a score. The processor selecting a list of n-number of candidate words from the dictionary whose index matches the precursor (i.e. the context). The processor causing m-number of candidate words from the list of candidate words to be displayed on the display screen. The processor causing the display to prompt the user to select one of the displayed candidate words or enter a desired word using said text entry device.

In response to the selection of a candidate word, the processor updates the precursor appending the selected candidate word to the end of the precursor, deleting the leading word, selecting a new list of candidate words whose index word matches the precursor, and causing the display to prompt the user to either select one of the displayed candidate words or enter a desired word using the text entry device.

According to another aspect, the processor may receive a sequence of key codes, each key code being assigned to a plurality of letters from the alphabet. The processor may determine a suggested sequence of letters corresponding to the sequence of key codes, cause the display screen to display the suggested letter sequence and prompt the user to correct a letter of the sequence. In response to a corrected letter, the processor may re-calculate the suggested sequence of letters. The processor may repeat the displaying, prompting and recalculation until the user inputs a confirmation signal indicating that the displayed letter sequence corresponds to an intended word. Preferably, the suggested sequence of letters is determined based on letter transition probabilities.

According to another aspect, a keyboard with dedicated keys for operation on the word level is provided. A WordBack key deletes the last word. A Up'n'Blank key capitalises the last word and adds a blank (space) character to the text input.

Further disclosed is a device incorporating a mechanism for adding words to a dictionary, a method for extending a dictionary and a computer program for performing the method.

### Brief Description of the Drawings

FIG. 1 is a block diagram of a device including the predictive data entry mechanism of the present invention;
FIG. 2 shows a sample device including the predictive data entry mechanism of the present invention;
FIG. 3 shows one method of displaying candidate words;
FIG. 4 is a table showing a one-word dictionary according to the present invention;
FIG. 5 is a table showing a two-word dictionary according to the present invention;
FIG. 6 is a table showing normalization of the one-gram dictionary of FIG. 4;
FIG. 7 is a table used to decode a word of text into a grammatical representation;
FIG. 8 is a table used to determine a candidate word using a grammatical representation;
Fig. 9 illustrates the operation of an arrangement of the invention;
Fig. 10 shows an example to illustrate an arrangement of the invention for the correction of a suggested letter in teach mode; and
Fig. 11 shows an exemplary display screen of a personal digital assistant (PDA) using text input mechanisms.

### Detailed Description of the Preferred Arrangements

The present invention provides an efficient method for inputting text, and is particularly suited for cellular telephones, handheld computers such as personal digital assistants, and other devices requiring data entry.

The present invention is indifferent to the specific method for inputting text. Text may be entered using a keyboard, a virtual keyboard such as a touch screen, a so-called Graffiti style of writing popularized by the PALM® operating system, or any other man-machine interface.

The basic concept underlying the present invention is that the next item of text is predicted based on the preceding word or words of text. Furthermore, non-linguistic contexts (such as the identification of a text field as "address field") may be used to predict words.

According to a first embodiment, the system provides a list of candidate words for the next word of text based on the preceding word or delimiter. However, as will be explained below, the present invention may readily be adapted to predict the next word based on any combination of preceding words or delimiters and/or linguistic analysis thereof.

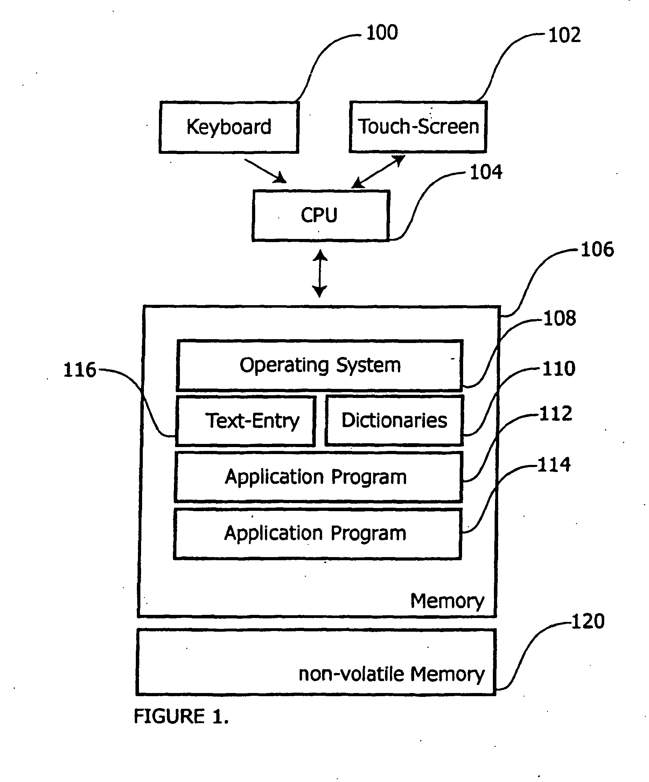

FIG. 1 is a block diagram of the operating environment of the present invention.

The system 10 of the present invention includes an input device 100 which may be a keypad, keyboard, touch sensitive screen or the like which hereinafter will be referred to as keyboard 100. The system 10 further includes a display 102 for displaying the text entered as well as an m word list of predicted words, the screen may be an LCD screen or the like, and in the case of a touch sensitive screen the display 102 may serve a dual purpose both as a display and as the keyboard 100.

The present invention will work with any means for inputting text, and any means for displaying text.

As further illustrated in FIG. 1, the system 10 includes a processor or central processing unit (CPU) 104 which executes commands via an operating system 108. The system 10 may include a plurality of application programs 112, an application for decoding handwriting into text 116, an application which displays text 114 and one or more dictionaries 110.

It should be appreciated that the text recognition application 116, the display application 114, and one or more of the dictionaries 110 may be implemented as firmware or microcode stored on a non-volatile memory 120 such as an EPROM, EEPROM or the like. Use of the term "software" throughout this disclosure should be interpreted to include software implemented through firmware and stored on a non-volatile memory medium.

The present system is realized as software or firmware or the like, architecturally located between the operating system 108 of the computer 104 and the application 112 that receives text as input, e.g. a word processor.

The system 10 is language specific and has one or more dictionaries or vocabulary modules. The dictionary 110 and keyboard 100 are language specific. However, the software may allow for switching dictionaries and thus switching languages.

A key aspect of the invention relates to its ability to predict the next word the user will input based on the preceding words or delimiters which will hereinafter be referred to as the context or precursor. It is notable, that the context may also arise from the type of application receiving the text or the type of text field receiving the text. In the first case, the application may give a hint to what kind of style the user will use (SMS, short message service: colloquial writing vs. word processor: formal writing). In the second case, some operating systems assign unique identifiers to certain text fields such as "name", "address", etc. This information may be used to activate a different dictionary containing all names, addresses, cities etc.

The system 10 predicts the next word the user will enter based on the context, and displays a list of candidate words. The number of candidate words displayed is dependent upon the size and resolution of the display (the screen's real estate), and the font size in which the text is displayed. Moreover, the system 10 may optionally be configured to only display candidate words whose score exceeds a threshold value, further limiting the number of candidate words displayed.

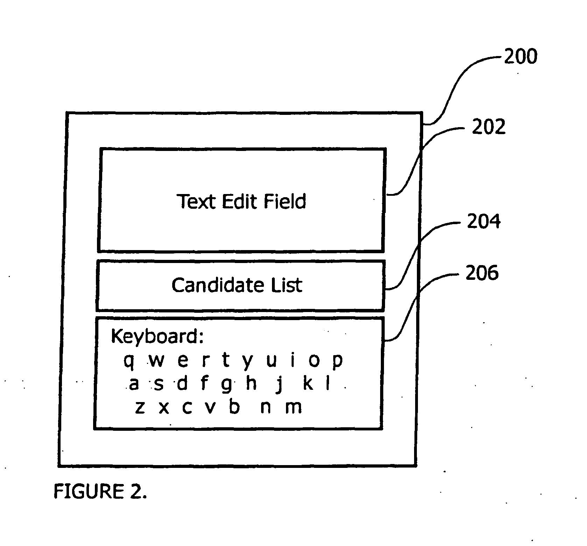

FIG. 2 is a block diagram of an illustrative device 200 employing the system 10 of the present invention.

The device 200 includes display having a text edit field 202 showing a text string entered or selected by the user. The display further includes a field 204 displaying a list of candidate words, and optionally a field 206 displaying a virtual keyboard.

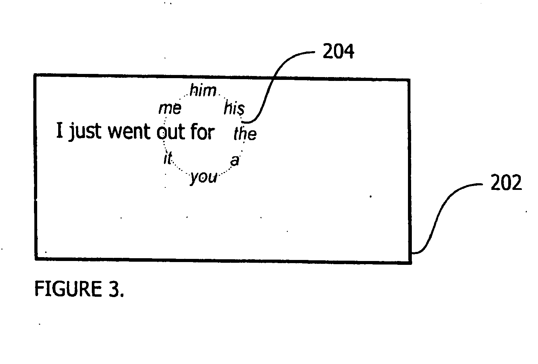

It is important to note, that the list 204 may take different forms of presentation. For example, it may be realised as a circle on which the words are presented. This is illustrated in FIG. 3. This circle 204 may follow the position in the text where the current input is directed to (this is called cursor which usually takes the visual form of a blinking vertical bar). For the sake of simplicity, the structure that is presented to the user will be termed "list" in the following.

One of the important aspects of the invention is that the list of candidate words is context dependent. The system 10 selects candidate words by looking at the immediately preceding word or words which will be termed a precursor. The number of words defining a precursor may vary. It should be understood that the term "word" as used throughout the specification refers to a conventional word of text and to a delimiter such as a space, a period, a comma, a semi-colon and the like.

As will be described below in further detail, the system may iteratively reduce the size (measured in words) of the precursor in order to obtain a desired number of candidate words. For example, a three word precursor may have two corresponding candidate words. If the display has room for 10 words, the system may obtain additional candidate words by reducing the size of the precursor. A two word precursor may for example have four corresponding candidate words, and a one word precursor may have ten corresponding candidate words.

The system 10 includes at least one dictionary 110 including a list of candidate word entries; each candidate word entry includes an index and a candidate word. It should be understood that a given precursor may have many candidates. Thus, the same index may appear in multiple candidate word entries in the dictionary. For example the precursor "the" is likely to have many candidates. Each candidate word entry further includes a score indicative of the frequency of occurrence.

As will be explained below, the dictionary stored a plurality of candidate word entries. Each candidate word entry including an index, a candidate word, and a score. The size (measured in words) of the index may vary from entry to entry. Thus the dictionary may store candidate word entries having a one word index, and entries having a two word index, and entries having a three word index, etc. In this manner, the system may use a one word precursor or a two word precursor etc.

Optionally, the score may be a normalized number between 0 and 1.

### Bi-Gram Arrangement

The method and system of the present invention will now be explained with reference to a bi-gram or two word arrangement in which the precursor is the immediately preceding word (or delimiter). In a tri-gram embodiment the precursor consists of the two immediately preceding words (or word/delimiter combination). Similarly, a four-gram embodiment the precursor consists of the three immediately preceding words. It should be understood that the teachings of the present invention may be implemented using any number of words in the precursor. The size of the index stored in the dictionary must correspond to the size of the precursor.

The dictionary 110 includes a plurality of candidate word entries; each candidate word entry includes an index, and a candidate word. The index is the key used to access the "candidate" word(s). It should be appreciated that a single precursor may have multiple candidate words. The index is at least one word or delimiter in length, but may consist of two or more words.

According to the bi-gram arrangement each candidate word entry in the dictionary 110 includes a list of two-word phrases in which the first word is termed the index and the second word is termed the "candidate" word. The precursor is the key or index used to access the "candidate" word(s). It should be appreciated that a single precursor may have multiple candidate words.

It should be appreciated that the precursor may be enlarged to include any number of words or delimiters. For ease of explanation the present example uses a one word precursor.

As noted above, each entry in dictionary 110 includes a score indicative of the frequency of occurrence, i.e. the frequency in which the user uses the phrase. A given precursor may have multiple candidate words, and the score associated with each candidate word may or may not be the same.

Each time the user enters (or selects) a precursor the system 10 searches the dictionary 110 for corresponding candidate words. The system 10 ranks the candidate words according to their score, and displays the first m number of candidate words in field 204.

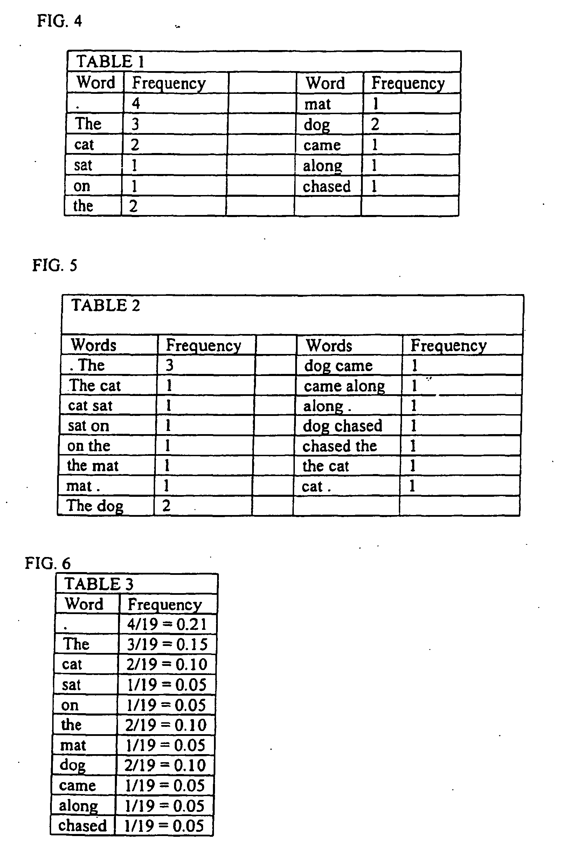

FIG. 5 below contains an illustrative list of two word phrases.

The system 10 may treat the initial state before any word has been entered in the same way it reacts when the precursor is a delimiter such as a period. In this manner the system 10 may be configured to provide candidate words in the initial state before the user has entered a first character of the text.

The system 10 may be self-training in the sense that new phrases and their corresponding scores may be dynamically added to the dictionary 110. Moreover, the score of existing phrases may dynamically update to reflect changes in the frequency of usage.

According to a preferred embodiment, the system 10 is provided with a robust dictionary 110 such that the full benefit of the system is immediately available to the user. Moreover, if the system 10 permits the score of existing phrases to dynamically update then the dictionary 110 will self-optimize to reflect the style, diction, and vocabulary of the user. Thus, even if the dictionary 110 is initially empty, the system 10 will compile its own dictionary reflective of the user's vocabulary, diction and style.

An initial dictionary 110 may be compiled by examining a body of text for x-word phrases, and ranking the frequency of the x-word phrases. In the bi-gram arrangement of the present example x will equal to 2.

Ideally the body of text used to compile the dictionary will contain a rich vocabulary and varied examples of style and diction.

The system 10 is especially useful for languages for which it is complex to input words, e.g. Chinese. The system 10 may thus operate on full symbols or on morphemes (one or more morphemes make up a word of a language) or even on syllables (e.g. Hiragana or Katakana in Japanese).

In the preceding example, the precursor was the immediately preceding word (or delimiter). However, one of ordinary skill in the art will appreciate that the invention may be readily adapted to select one or more candidate words using any size of precursor, e.g. a two or three word precursor.

In the aforementioned example, the candidate words were generated using the score associated with each dictionary entry, where the score is indicative of the frequency and is statistically generated.

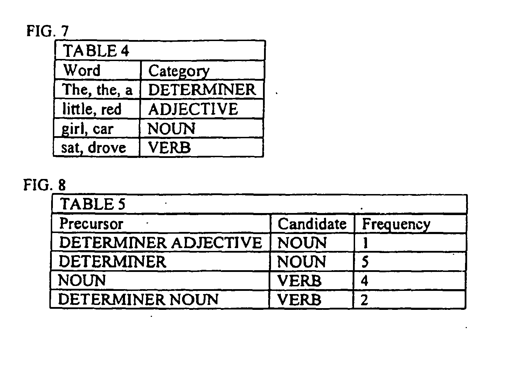

However, the candidate list can also be generated using grammatical rules. For example, if the system 10 has identified a context in which only a verb can follow, all nouns will be excluded from the candidate list. If for example, one of the dictionaries (c.f. to figure 7 as an example) is extended to have word classes such as DETERMINER, ADJECTIVE, VERB, NOUN, etc. (these words are capitalised to reflect the word class and not the word itself) associated with words, then the precursor may be defined as a string of word classes. For example, one precursor may be "DETERMINER ADJECTIVE" and have "NOUN" as candidate. In this way, the phrases "the red car" and "a little girl" may be realized within one entry. The table in figure 7 is an example for a dictionary that maps words into their respective categories. The corresponding dictionary used to predict candidates from the preceding context is given in figure 8. Figure 8 is also an example of varying sizes of context used for determining the precursor. While there is a rule that predicts a NOUN after a DETERMINER, there is also a rule that predicts a NOUN after a DETERMINER followed by an ADJECTIVE. This rule would predict "car" and "girl" after "a little". To determine a precursor, even more complex analyses may be performed rather than a mere mapping of word forms to word classes as is described below.

Figure 7 provides a mapping mechanism for translating words into their respective classes. Such a translation table is a very simple mechanism of computing word classes from word forms. Other grammatical predictions based on more complex linguistic analyses of the context (rather than just mapping words to word classes) may be readily adapted to generate the candidate list. It is noteworthy, that the grammatical information need not be constrained to the word class. Additionally inflectional information maybe used (such as number: plural/singular, case: nominative/accusative, etc.) to further specify the grammatical information of the words. In this way NOUN_{SING, NOM} (denoting a noun in singular, nominative) may specify the word "girl", but not the word "girls" (as this word is the plural form and would correspond to NOUN_{PLUR}, _{NOM}). Rule based prediction for this precursor having the rule "precursor: NOUN_{SING}, _{NOM}, candidate: VERB_{SING}, _{NOM} ", where VERB_{SING, NOM} denotes a verb in singular, nominative, would prevent the candidate "wants" for the precursor "girls", but would allow the verb for the precursor "girl".

Also the translation of a grammatical precursor into a grammatical candidate class may be realized in more complex and algorithmic ways than the simple table that is given in FIG. 8. For example, a set of rules maybe iteratively or recursively applied before using the grammatical representation of the text just as a precursor.

A simple grammatical prediction system would generate the candidate list in the following way: first, translate the text written already into a grammatical representation (for example using table 4 given in FIG. 7). Next match the last n grammatical representations against the precursors in the table 5 (FIG. 8) and determine the candidate. Finally, translate the candidate back to word forms using table 4 (in FIG. 7).

It is noteworthy that several rules could match the grammatical context. In this case, the list of candidates may be constructed by combining the candidates resulting from the various matches.

In this version of predicting the text, the prediction was made using grammatical information (FIG. 7) and grammatical rules (FIG. 8) instead of statistical information. Of course, these two methods may be combined in order to obtain even better prediction. For example, the words in table 4 may have additional information about the frequency of use. In this way, a ranking of the candidates within one grammatical category may be obtained.

Generally speaking, the invention provides two methods for inputting a word of text. First, the user can type in words, character-by-character, using the keyboard. Second, the user may select a displayed candidate word. It should be understood that reference to typing in a word includes any method of entering text.

As noted above, the system may provide one or more candidate words in the initial state before the user has provided a precursor.

According to a further refinement of the present arrangement, the system may refresh or update the candidate list in response to character(s) entered by the user. More particularly, the system responds to the user's entry of the first letter of the desired word by displaying only those candidate words whose initial letter corresponds to the entered letter. In this case the candidate words are selected in accordance with the precursor and the characters entered by the user.

It is important to appreciate that the aforementioned refinement is significantly different from the prior art disambiguation methods described in the background of the invention. The prior art methods simply lookup words in a conventional alphabetic dictionary whose initial letter(s) correspond to those entered by the user. Since the conventional dictionary is not context driven, the system will display words which do not fit the context. In fact the system will respond with the same list of words each time the user enters a given letter, regardless of the context.

In contrast, the present invention selects candidate words based on the context (precursor). The list of candidate words are ordered according to the score and only the first m words are displayed. The aforementioned refinement narrows the list of candidate words by selecting only those candidate words whose initial letter(s) correspond to those entered by the user. Thus the refinement makes the score a secondary sort key rather than the primary key. Most importantly, the present system will provide suggestions for words following the word just entered. Thus, there will be candidates for the next word although no key stroke has occurred. None of the prior art has claimed such an ability. Prior art only assists the user complete the current word. The present invention predicts the word following the current word.

In the simplest case, the score mentioned above may be the frequency of use.

Optionally, the processor will dynamically adjust the size of the precursor to ensure that the system obtains a desired number of candidate words. Thus, if the system retrieves too few candidate words it can dynamically reduce the size (in words) of the precursor. Alternatively, if the processor retrieves too many candidate words it can dynamically increase the size (in words) of the precursor. In other words, if the number of candidate words retrieved is a threshold number of words greater than the number of words which may be displayed on the screen then the processor can dynamically increase the size of the precursor. Using our example, the processor may shift from a bi-gram which uses a one word precursor to a tri-gram which uses a two word precursor, i.e. the two words which immediately precede the word to be entered.

Optionally, the dictionary 110 may include a list of individual words (candidate words without an associated precursor) and their respective score in addition to the aforementioned x-word phrases. These single word entries will be termed orphan words. As will be explained below, these orphan words are used to supplement the candidate words when the number of candidate words falls below a pre-defined threshold number. For example, if there is only one candidate word for a given precursor, the system 10 may display one or more of the orphan words.

The arrangements and refinements discussed above were explained with reference to a single dictionary 110. However, the present invention may be implemented using multiple dictionaries 110 without departing from the scope of the invention. For example, a first dictionary 110 may be used to store single word (one-gram) entries and their respective scores, and a second dictionary 110 may be used to store two-word (bi-gram) phrases and their respective scores. Alternatively, the system 10 may include a fixed, pre-defined dictionary 110 and a user-defined dictionary 110. Thus the concept of the invention may be extended to include any number of dictionaries. Also, as mentioned above, different dictionaries may be used for different receiving applications or different text fields.

As computing power is generally limited in portable devices it may be useful to keep the dictionaries 110 in different tables. Generally, a one-gram table/dictionary will be smaller than a bi-gram dictionary and thus can be searched faster. However implementation details do not change the scope of the invention and one of ordinary skill in the art will appreciate that there are different possibilities to implement the dictionaries and their access. For example the mapping from precursor to candidates may not be realised through an index, but may arise from a more complex computation. This may be the case for predictions based on grammar.

One method for calculating the score for a dictionary will now be explained with reference to the following example. Consider the following text:
"The cat sat on the mat. The dog came along. The dog chased the cat."

### Dictionary Build Up:

Generally, the text is pre-processed, to include a leading delimiter such as a period as the first character. Moreover, a space is inserted between words and delimiters (periods, commas and the like) in order to isolate the delimiters.

Afterwards, the above sentence would read:
". The cat sat on the mat. The dog came along. The dog chased the cat."

For building up a one-word (one-gram) dictionary, the words and their frequency are counted. In the present example, different word cases (differences in capitalization) are treated as different words, i.e. "The" and "the" would be to different words.

Table 1 (FIG. 4) shows the one-word dictionary for the example text.

For building up a two-word (bi-gram) dictionary, combinations of two words and/or delimiters are used as entries for the dictionary (c.f. Table 2, FIG. 5).

It is apparent from FIG. 5 (Table 2) that for bi-gram frequencies, the text corpus used for training must be larger to get better estimates of the frequencies. Here, most frequencies have the value of one. Correspondingly for a tri-gram frequency in which the precursor is two words the text corpus used for training must be even larger still to get better estimates of the frequencies.

### Initial Word Candidates:

As described above, the system 10 may be configured to present a list of candidate words in the initial state before the user has entered a precursor. In the preferred arrangement these candidate words are generated by looking at bi-grams, where the precursor is in fact a period. Using the bi-gram dictionary above, the only candidate: is "The", as there is only one bi-gram entry in the dictionary starting with the period, namely ". The".

Obviously, it is desirable to have a full complement of candidate words in order to provide a reasonable number of selections from which to choose. According to one arrangement, any empty slots in the candidate list may be filled by orphan (one-gram) words in decreasing order of frequency. Words that already appeared due to bi-gram frequencies will be excluded from the fill-up items.

In an initial state which assumes a precursor ".", the following eight item candidate list may be selected using the one-gram and bi-grams (FIGs. 4 and 5): "The . cat the dog sat on mat" The first candidate "The" is selected from Table 2 using the precursor ".". However, since FIG. 5 does not contain any other candidates for the precursor ".", the remaining seven words are selected from the orphan word dictionary (one-gram) FIG. 4 (Table 1) according to their score.

### Entering Text Using Candidates only:

Continuing with the previous example let us assume that the user selects the candidate word "The" and this word is then displayed in the text output field 202. The system 10 now makes "The" the precursor and selects a new list of candidates. The two obvious candidates from the bi-gram dictionary given in table 2 would be "cat" and "dog". As "The dog" has the frequency 2, it will rank higher after sorting. Again, the rest of the list would be filled up by orphan (one-gram) words.

The new list presented in field 204 to the user would thus read like: "dog cat. The the sat on mat". The user could now choose the word "sat". The only item in the bi-gram dictionary would then be "on", and so on.

### Entering Text Using Candidates And Keyboard:

According to the aforementioned hypothetical, on start-up, the system 10 generates the following initial candidate: "The . cat the dog sat on mat". If the user enters a character instead of selecting a candidate word, for example the character "t", then the system filters out all words from the candidate list that do not begin with the letter "t" independent of the capitalization of the candidate words. In the present situation, there would only remain two words that make up the reduced list: "The the". Again, the residual positions would be filled up by orphan (one-gram) words, in the present case (i.e. the present dictionaries in Tables 1 and 2) however, there are none.

### Constructing A User Dictionary:

According to one refinement, the system 10 adapts to the user's style by tracking the words that the user enters by building up X-gram and one-gram frequencies, where X is any integer value greater than 1. The X-gram and one-gram frequencies may all be stored in a single dictionary 110. However, according to a preferred arrangement, one dictionary 110 contains pre-defined X-gram and one-gram frequencies and another dictionary 110 stores user-defined X-gram and one-gram frequencies. The user-defined X-gram and one-gram frequencies will be different in their distribution from the pre-defined dictionary(s) 110 which were computed from a different corpus of text. The text corpus may, for example, include newspapers, stories, etc. and will thus differ from the user's style. The text corpus used to construct the pre-defined X-gram and one-gram frequencies may be very large compared to the user's inputs. Consequently the frequencies of the respective dictionaries 110 may need to be normalized to the overall size of the corpora and combined to have a reflection of the user's writing style in the candidate list.

Normalization of the one-gram dictionary (Table 1, FIG. 4) will result in Table 3 (FIG. 6). Please note that the summed frequency which by definition equals the overall size of the corpus of the words is 19.

Note that, due to a division by a constant factor, the order of frequencies remains the same. Note also, that all values range between 0 and 1. Such normalization would be computed for all dictionaries. Thus, independent of their size and absolute frequencies, they would contain words with frequencies ranging from 0 to 1. When computing the combined score by which candidates are ranked, now there would be a 1:1 influence between two dictionaries on the ranking.

In the present arrangement, the score is computed for a candidate word in the by the normalized frequency of the delivered dictionary plus the normalized frequency of the user dictionary times a scaling factor. The scaling factor accounts for the stronger influence one would want to give to the user dictionary. However, different formulae may be used to compute the overall scores used for ranking the candidate words.

The normalization and computation of the score is analogous for the bi-gram dictionaries.

Also, more than two dictionaries may be used for computing the score. The procedure would be analogous to the aforementioned procedure.

### Example for Inputting Text:

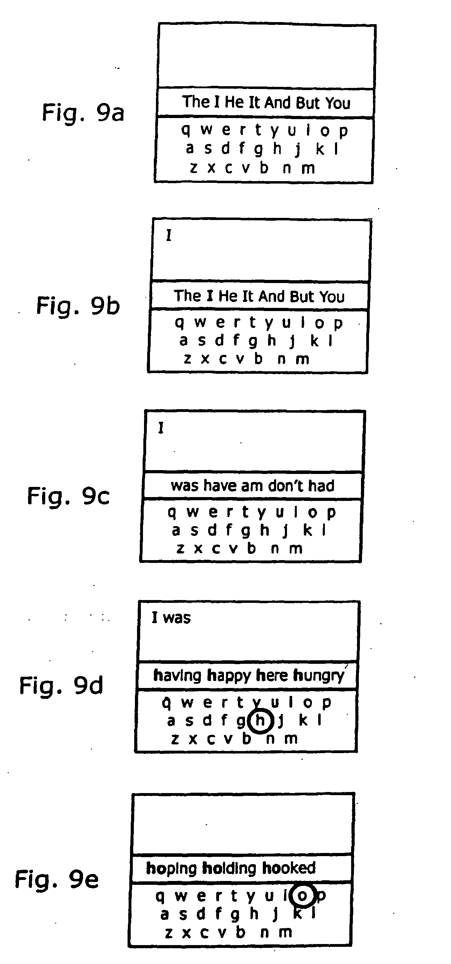

Fig. 9 illustrates an arrangement of the invention based on a depicted example for inputting text. Fig. 9a shows an example display of a text input device according to the invention. The display is arranged similar to the arrangement shown in Fig. 2. The top part of the display represents a text edit field displaying a text string entered by the user. The middle part displays a list of candidate words. The lower part of the display represents a virtual keyboard. The virtual keyboard is optional and used for illustrative purpose. Alternatively, a hardware keyboard having a plurality of keys may be employed for text input.

Fig. 9a shows the initial state of the input procedure. The text edit field is empty and a list of words with which the user most frequently starts a sentence is displayed as candidate list. If the intended sentence starts with on of these displayed candidate words, the user must simply select the respective word, e.g. by operating a pointing device to move a cursor to the intended word and activating the word by clicking on it or pushing an 'ok'-key (Fig. 9b). The selected word is then displayed in the text edit field. Next, a new candidate list is presented (Fig. 9c). The candidates are selected from the dictionary based on the current context. In general, the candidates are words that best fit the current context. Depending on the statistical model applied, the context in this state will be the previously selected word as precursor for a bi-gram model, or the marker for the begin of a sentence (e.g. the period character '.') and the previously selected word ('I' in the shown example) for a tri-gram model. Again, the user can select one of the candidates which to be added to the text edit field. That way, the input text forms word by word. This procedure is repeated until the end of the input text. In the best case, a whole sentence can be entered by selecting only candidate words. This leads to only one stroke or click per word and enhances usability.

If the intended word is not in the candidate list, the user can strike one of the keys on the keyboard or select a letter from the virtual keyboard with the pointing device. A new set of candidates will be listed that begin with the selected letter (Fig. 9d). The new candidates are selected from the dictionary based on their likelihood (score). For instance, the highest ranking X-gram words (e.g. bi-grams, trigrams, etc.) starting with the selected letter(s) and matching the context may be selected and displayed. Higher ranking X-grams starting with different letters are suppressed. Alternatively, the most frequent one-gram words irrespective of the context may be selected and displayed. Both methods may further be combined, e.g. if not enough X-grams starting with the selected letter(s) for the present context are available. Then, frequent words matching the initial letter(s) may be filled in the displayed candidate list. Preferably, the words in the candidate list are sorted according to their scores, the more likely ones at the left (or right) side of the display. This simplifies the selection of a candidate as the more likely ones can be selected with fewer strokes or clicks.

More letters can be entered, thus further constraining the list of candidates (Fig. 9e). Preferably, the list of candidates is re-sorted according to the word like-lihoods when the list is further constrained based on additional letters. In most cases, the intended word is displayed with only a few input letters and can be selected by the user. If there is no matching candidate and the user enters a "space"-character (or any other designated special character), the system will enter a teach mode where the new word will be learned and added to the dictionary. In the future, the new word will appear in the list of candidates and can easily be selected. Thus, the system is adaptive and learns the vocabulary of the user.

The above example uses a QWERTY-type of keyboard, either virtual or real. Of course, other types of keyboards can be used as well. For instance, a handwriting recognition or a telephone type of keypad commonly applied in mobile phones, wireless communication devices, PDAs (personal digital assistance) or other portable and/or handheld devices can be used. For these keypads (sometimes referred as 'touch tone' or DTMF keypads), the digit keys are assigned with a plurality of letters each. For instance, the digit '2' has assigned the letters 'A', 'B', 'C' of the alphabet. The user presses the '2'-key to input that he/she wants to select either 'A', 'B' or 'C' (or 'a', 'b', 'c' if the system differentiates between lowercase and upper-case letters). The present invention will then restrict the selected candidates to words that match either of the letters associated with the pressed key. These constraints for the candidates are not that strong as if only one letter would be selected, but due to the text prediction capabilities based on the word context as applied by the invention, in most instances, it is still possible to narrow down the candidate list to only a few displayed candidates which allows the user to easily select the intended word. In most cases, the number of available candidates will go down rapidly to a single candidate with only a few keystrokes, even if the keys are not unambiguously assigned to individual letters. The user then only has to confirm that the remaining candidate is the intended word, or activating a designated key for entering the learning mode if the intended word is not displayed.

As already mentioned, most mobile phones do often not provide a full keyboard or touch screen. On mobile phones, the candidate word may be selected by a pointing device, such as a joystick or wheel, or by pressing a key having multiple characters associated. If the intended word is not suggested at first glance (that is displayed in the candidate list), the user can normally evoke it by pressing one of the digit keys in much the same way as in conventional single-tap text entry systems (i.e. the correct letter is proposed by only striking the corresponding digit key once). However, while conventional single tap systems construct a word letter-by-letter from the dictionary, the present invention selects it from the most probable candidates for the current context. Thus, the user gets words proposed immediately after entering the first key and at a higher probability of predicting the correct word.

### Teaching New Words:

In the case where the intended word is not in the dictionary and thus can not be predicted, a text input system according to an arrangement of the invention automatically changes to a teach mode and allows the user to input the new word in an intuitive way. That way, the system vocabulary is extended and adapted to the user's vocabulary. In order to allow the identification of the new word with as little keystrokes as possible, the arrangement uses the information the user has entered already, i.e. the sequence of key codes entered during the previous attempt to select the correct candidate word. Please remember that when using a digit keypad as input device, the individual digits are assigned to a plurality of letters each. Thus, the sequence of key codes, being characteristic for a digit string such as 7825489', is highly ambiguous for the sequence of associated letters. Usually the digit keys have 3 or more associated letters, respectively, and the above digit string will result in 4*3*3*3*3*3*4 = 3888 possible letter sequences (ignoring lowercase/uppercase distinction and special characters present in many languages which would further increase the number of possible letter strings). As the intended word is not listed in the dictionary, the same is of no help for constraining the letter sequence. In the prior art, the user has to enter the new word in the teach mode by applying a multi-tap input system where each letter requires one or more keystrokes of the associated digit key (e.g. 3 strokes of the 2-key for entering the 'C' character). This is cumbersome and results in that the teach mode is rarely used and the vocabulary not extended or adapted to the user's writing customs.

In order to reduce the number of necessary clicks or keystrokes for inputting a new word in the teach mode, an arrangement of the present invention uses the information that the user has already entered. The system displays a first suggested string of letters selected from the possible letter sequences for the initial key sequence. Preferably, the suggested string is the most probable letter sequence corresponding to the entered key sequence. The system will then prompt the user to make corrections to letters in the suggested string in order to identify the intended word. The user may replace one or more of the suggested letters until the word is correct. Preferably, the replacements are caused from left to right and upon a letter replacement the remainder of the suggested string (i.e. to the right of the replacement) is recalculated. The recalculation determines the most probable sequence of following letters to fill-up the displayed letter string to the end. As the user has already entered an initial key sequence, the total number of letters for the intended word are known. This allows to input the intended word with only a few corrections of suggested letters. As the possible alternatives to the displayed letters are little (only the letters which are assigned to the respective key are to be considered), the replacement is simple and fast. Thus, the invention provides a user friendly text input in the teach mode of a text input device.

The calculation of the most probable letter sequence corresponding to the initial key sequence is preferably based on character transition probabilities such as character bi-grams or tri-grams. Character transition probabilities may be estimated based on statistics such as frequencies of occurrence of character pairs, triples, etc. in text and represent phonotactic characteristics of a language. For instance, while in some languages the character combination 'sz' is very unlikely, it may be quite common in another language. Thus, character transition probabilities are preferably language dependent and the statistical model corresponds to the language of the applied dictionary. The character transition probabilities are stored in a memory of the input device. The character transition probabilities may be estimated from a text corpus beforehand and loaded into the device and/or may be updated based on the text input into the device during usage. This allows to adapt the character transition probabilities to the user's vocabulary and to consider character combinations which are in general not likely, but which are frequently used by the user of the particular device, for instance for proper names mentioned often in the user's texts.

The calculation of the most probable letter sequence may be based on a sequential left-to-right algorithm which sequentially selects the most probable alphabetic letter matching the constrains of the entered key sequence. The algorithm starts with a word delimiter and selects the most probable letter of the allowed set for starting a word. Next, the letter of the set corresponding to the second entered key having the highest likelihood of following the selected first letter is determined. This is continued for the following letters of the suggested sequence using the probability of letter pairs or triplets, for example, until the end of the sequence. If one of the suggested letters is replaced by the user, the following letter is recalculated based on the new context and the letters following to the right are adjusted accordingly. Thus, a new string is suggested and displayed each time a letter is corrected.

Preferably, the user starts correction at the natural starting point for words according to the input language, which is from left to right for most languages, but the present invention is not restricted thereupon and may be implemented for other input orders as well. Alternatively, an algorithm like the Viterbi-algorithm is employed to calculate the overall most probable sequence of letters for the given constrains. This algorithm selects the string of letters with the highest combined probability for the entire sequence. When the user makes corrections to individual letters, the search trellis is further restricted to the replaced letter and a new optimal path in the trellis is computed. The optimal path corresponds to the most probable sequence of letters for the updated constraints and the recalculated sequence of letters is displayed as new suggestion.

The teach mode according to an arrangement of the invention is further explained based on the following example. Imagine the user wants to input the word "Quality" and the word is not in the dictionary. During the text prediction phase, the user has already entered the corresponding key sequence "7825489", but the intended word was not listed in the candidate list. The system calculates the most probable letter sequence corresponding to the key sequence using letter bi-grams or tri-grams. In the example, the string "stality" is determined in this manner as suggestion and displayed to the user. By moving a cursor key, e.g. the left arrow key, the teach mode is activated and the cursor positioned at the beginning of the suggested letter sequence, i.e. the character 's'. The user can now correct this character if necessary. In this example, the user replaces 's' with 'Q'. The reset of the word is recomputed automatically, i.e. letter transition probabilities are applied to find the most probable letter sequence starting with 'Q' and meeting the constraints imposed by the input key sequence. In this case, the most likely letter from the set 'tuvTUV' corresponding to the second key ('8') is determined. This is the letter 'u' in the present example as it has a high probability of following 'Q'. The method continues and the suggested letters are determined to "Quckity" which is displayed to the user as updated suggestion. The user can then move the cursor to 'c' and change it to 'a' (out of the set 'abcABC' for the '2'-key). Again, the most probable letters following the corrected letter are determined. Here, the next letter in the present sequence is 'k' which is unlikely to follow 'a'. Thus it is replaced by the arrangement with 'l' having a higher probability of trailing 'a' in a bi-gram example or 'ua' in a tri-gram example. The recomputed letter string is now "Quality" which is the intended word. Thus, the user can select it, e.g. by entering the 'ok'-, 'enter'- or 'blank/space'-key. The new word can then be added to the dictionary and the teach mode quits. Please note that the intended word is entered from the suggested letter string with only the correction of 2 letters. The advantage of the present invention becomes even more apparent for longer strings. Due to the continuous recalculation of the most likely letter sequence matching the already available information (i.e. the constraints imposed by the initial key sequence and the corrected letters), the quality of the suggested string improves rapidly and the intended word is attained with only a few corrections.

The user may correct a suggested letter by moving the cursor to the letter, e.g. by operating a joystick or cursor key, and selecting the correct letter from the set of letters assigned to the corresponding digit key initially pressed. That is the correct letter is from a small number of alternatives. For the correction, the user may use the digit-keys again by striking the respective key as many times as necessary to select the correct letter from the set of assigned letters, thus using a multi-tap selection algorithm. In the above example, this would require to hit the '7'-key 6 times for toggling through the sequence 'pqrsPQRS' assigned to the '7'-key until the 'Q' character.

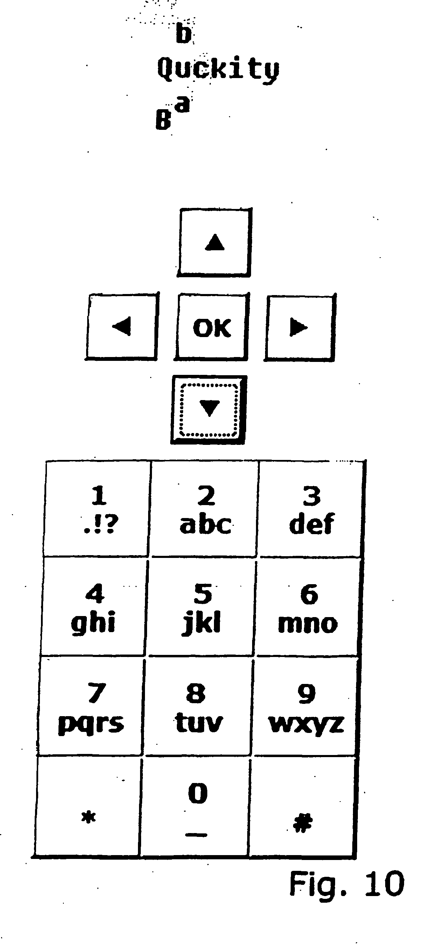

Alternatively, the choices of letters available for a selected position in the suggested string are displayed and the user may choose the correct letter by selection, e.g. via cursor key or joystick. Fig. 10 shows an example to illustrate the concepts of the present invention for the correction of a suggested letter. The suggested letter sequence is "Quckity" and the user has positioned the cursor on the 'c' in the string, e.g. by using the cursor keys shown in the figure. The user can now use the digit-keys shown in the lower part of the figure for a multi-tap selection of an alternative letter. In addition, the alternative letters 'baB' to the suggested letter 'c' are displayed on the screen of the device for this example. Of course, character sets for other languages, such as German, together with the respective dictionaries can be used as well. In some languages more letters are assigned to the digit keys of the keypad, such as the German "Umlaute" 'äöü'. Preferably, the alternative letters are arranged according to their respective probability of following the previous letters in the sequence. More likely alternatives are arranged closer to the suggested letter so that they can be selected with fewer clicks or cursor movements. In the example shown in Fig. 10, the probability of 'b' and 'a' following the precursor 'u' is higher than for 'B'. Of course, the highest probability of following 'u'is for the suggested letter 'c'. The arrangement of alternative letters according to their probability further reduces the necessary number of keystrokes for the correction of the suggested string. Thus, the usability of the text entry device or method is enhanced. The arrangement of alternative letters may be linear or arced which would allow a more compact representation on a small display. The alternative letters may be arranged on one side of the suggested letter string (above or below), ranked according to the probability of the letters for fitting into the string, or on both sides of the suggested letter string, having more likely letters positioned closer to the presently suggested letter, which further reduces the number of necessary clicks or keystrokes as the two most probable alternative can be reached with a single click or keystroke. Other arrangements for the display of alternative letters are possible and within the scope of the present invention.

The above explained methods for identifying an input word based on letter transition probabilities according to the invention can be applied to digit key based text input systems without dictionary, too. In this case, the user may input digit key codes using single-tap first. Next, the system determines, based on the constraints given by the sequence of key codes, the most probable sequence of letters as suggested letter string. The suggested letter string may be corrected and is recalculated, as explained above, until the intended word is displayed. The intended word identified that way can then be used as text input for all kinds of applications such as word processing or email.

As alternative, the text input of the invention based on letter transition probabilities can operate sequentially. As a digit key code (having a plurality of letters assigned) is input, the most probable letter is determined based on the letter transition probabilities and displayed as suggested letter. The alternative letters are displayed simultaneously in an arrangement which allows an easy selection and correction of the presently suggested letter, e.g. along a line or an arc intersecting the suggested letter. Preferably, the more probable alternatives are arranged closer to the suggested letter facilitating the correction by selecting an alternative letter. If a new digit key code is received, the presently suggested letter is accepted and a new suggested letter is determined based on the list of letters assigned to the new key and the letter transition probabilities. That way, letter by letter will be added to the suggested string, corrected and/or confirmed until the intended word has formed.

### Word-Level Keys:

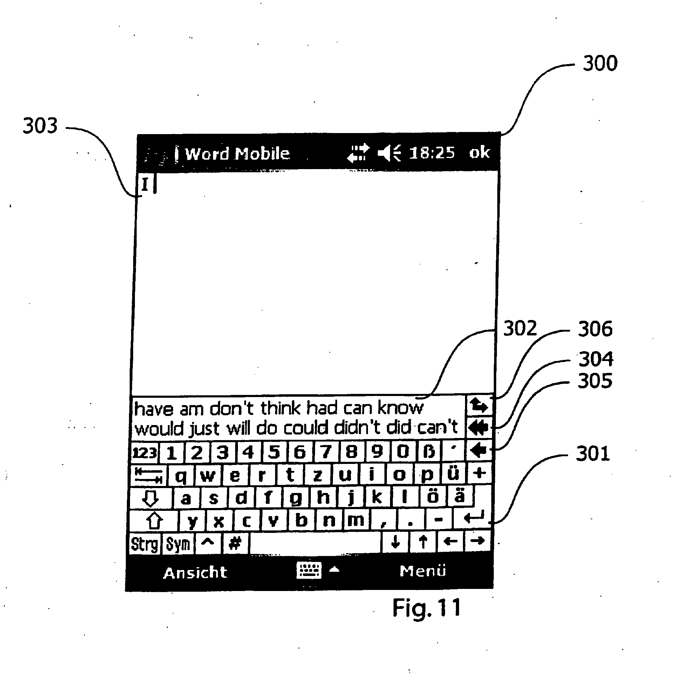

Fig. 11 shows an exemplary display screen of a personal digital assistant (PDA) 300 using text input mechanisms according to the present invention. The PDA has a virtual keyboard 301 for activation by a pen or stylus, a display area 302 for displaying candidate words determined by the predictive text mechanism of the invention, and a text edit field 303 for displaying the inputted text. The arrangement is similar to Fig. 2. The candidates displayed in the display area 302 are the most probable words from the dictionary following the precursor word "I".

In addition to a regular keyboard, the virtual keyboard 301 comprises a WordBack key 304 for deleting the last displayed word in the text field or the last word before the cursor. The WordBack key 304 is equivalent, for word based text input systems, on the word level to a BackSpace key 305 as it operates on the level of words rather than on the level of letters and allows the deletion of a complete word with on keystroke. For instance for a predictive text input system or method according to the present invention, the user can easily delete the last word with the WordBack key 304 if he/she has previously clicked the wrong word in the candidate list 302. The WordBack key 304 may show a backwards double arrow symbol '◄◄' to indicate its function to the user.

The virtual keyboard 301 comprises an additional special key 306 named Up'n'Blank key. The Up'n'Blank key 306 is especially useful when the user enters a word that is not in the dictionary. In the teach mode, the system learns new words after receiving a teach mode indication signal, e.g. when the space bar or a punctuation mark is entered. There are situations where the system has to learn a capitalised word, e.g. a proper name such as "Peter". Users normally enter letters in small caps. In the case of a new name, the cursor will be a the end of the new word ("peter|") and the user would have to go back to the beginning of the word, delete the small cap initial letter ("|eter"), insert the capitalised letter ("P|eter"), go to the right position of the word again ("Peter|") before entering a blank ("Peter |") to allow the system to learn the word in the teach mode properly. This time consuming process can be shortened by providing a dedicated key for performing the entire correction process with one keystroke or click. At the end of a new word, the user may simply strike or click the Up'n'Blank key 306 instead of the regular space key and the previous word is automatically capitalised and a space character added to the input text. Preferably, the Up'n'Blank key 306 inverts the case of the initial character of the previous word. Thus, if the capitalisation was wrong, a second activation of the Up'n'Blank function associated with the key 306 will invert the initial letter of the previous word and return it to lower case which corrects the error.

The function of the Up'n'Blank key 306 is not only useful for the learning of new words, but has many advantages during normal text input as well. The functionality associated with the Up'n'Blank key 306 will allow a user to type text in lower case letters and to press or click the Up'n'Blank key 306 at the end of a word which is to be capitalised. As a space character is added to the capitalized word, the text input can continue with the next word. No additional keystroke is necessary. Compared to the usage of the normal shift key, one keystroke is saved and the somewhat difficult simultaneous operation of the shift key with the key for the letter to be capitalised is unneeded. The Up'n'Blank key 306 may show a special symbol to indicate its function to the user. For instance, a corner symbol having two arrows may be assigned to the key to indicate that the previous word is capitalised '↑' and the text input continued with a blank '→'.

The implementation of the WordBack key 304 and the Up'n'Blank key 306 is particularly simple for a virtual keyboard, where a new input field showing the WordBack or Up'n'Blank symbol is displayed. Preferably the special purpose keys 304, 306 are arranged next to the candidate list 302, but they can be positioned differently. For a hardware keyboard, new keys need to be physically arranged at a convenient position. The functions of the new keys can be implemented as software in the keyboard driver module of the input device. This module receives signals when a virtual or real key is operated by the user and stores the input text in a keyboard buffer for access by other software applications. The input text can then be amended upon the activation of one of the word level keys 304, 306 according to the respective key function. Other software or hardware implementations will be contemplated by the person skilled in the art. The WordBack key 304 and the Up'n'Blank key 306 are preferably useful for portable devices having small or virtual keyboards and/or applying a predictive word level text input having possibly a teach mode for adding new words.

A further arrangement relates to a computer program stored on a computer-readable medium for causing a processor to perform a method according to the following claims when the computer program is executed by the processor.

Although examples of an electronic device utilizing an efficient context-related data entry method and its use have been described and illustrated in detail, it is to be understood that the same is intended by way of illustration and example only and is not to be taken by way of limitation. The invention has been illustrated in the context of a cellular telephone and personal digital assistant. However, the data entry system may be used in a data entry application. Accordingly, variations in and modifications to the system and its use will be apparent to those of ordinary skill in the art.

## Claims

1. A device, comprising:
a display screen (200) for displaying m-words of data;
a data entry device (100) for entering data;
a processor (104) receiving data from the data entry device (100) and causing it to be displayed on the display screen (200), wherein upon activation said processor (104) initializes a precursor (303) to a predefined value;
a non-volatile memory (120) storing a dictionary containing a plurality of entries, each said entry including a one or more word index, a candidate word and a pre-defined score;
said processor (104) selecting a list of n-number of candidate words from said dictionary whose one or more word index matches the precursor (303);
said processor (104) causing m-number of candidate words (302) from said list of candidate words to be displayed on said display screen (200);
said processor (104) causing the display (200) to prompt the user to select one of the displayed candidate words (302) or enter data for identifying a desired word using said data entry device (100),
wherein the pre-defined score depends on the frequency of occurrence of the pair of one or more word index and candidate word in a text corpus,
wherein said candidate words (302) are displayed on the display screen (100) in an order corresponding to their respective score.

2. The device according to claim 1, wherein in response to the selection of a candidate word, said processor (104) updates the precursor (303) by appending the selected candidate word to the end of the precursor (303) and deleting the leading word, selects a new list of candidate words (302) whose one or more word index matches the precursor (303) and causes the display to prompt the user to either select one of the displayed candidate words (302) or enter data for identifying a desired word using said data entry device (100).

3. The device according to claim 1 or 2, wherein said dictionary containing a score associated with at least selected ones of the plurality of entries; and
wherein if m, the number of words capable of being displayed on the display screen (200) is less than n, the number of candidate words retrieved, then said processor (104) causes m-number of candidate words (302) having the highest score from said list of candidate words to be displayed on said display screen (200).

4. The device according to any of claims 1 to 3, wherein:
said precursor (303) comprises at least one word; and
if m, the number of words capable of being displayed on the display screen (200) is greater than n, the number of candidate words retrieved, then said processor causes n-number of candidate words (302) from said list of candidate words to be displayed on said display screen (200), and if said precursor is greater than or equal 2 then the processor (104) deletes the leading word from the precursor (303), selects a supplemental list of candidate words from said dictionary whose one or more word index matches the precursor (303), and displays m-n number of said supplemental candidate words to be displayed on said display screen (200).

5. The device according to claim 4, wherein said dictionary containing a score associated with at least selected ones of the plurality of entries; and
wherein said candidate words are displayed on the display screen (200) in an order corresponding to their respective score.

6. The device according to any of claims 1 to 5, wherein said dictionary containing a score associated with at least selected ones of the plurality of entries, and said processor periodically updates the score of selected said candidate words stored in said non-volatile memory to reflect a frequency of usage.

7. The device according to any of claims 1 to 6, wherein if said processor (104) is unable to find a match between at least one said one or more word index stored in said dictionary and said precursor (303), then said processor (104) creates a new entry in said dictionary in which said precursor (303) is the one or more word index and the candidate word is the word entered using said data entry device (100).

8. The device according to any of claims 1 to 7, wherein the processor (104) causes selected said candidate words (302) from the selected list to be displayed whose initial character(s) match the character(s) entered using said data entry device (100).

9. The device according to any of claims 1 to 8, wherein said dictionary containing a score associated with at least selected ones of the plurality of entries; and
wherein said processor (104) causes the display screen (200) to display only candidate words whose score exceeds a threshold value.

10. The device according to any of claims 1 to 9, wherein:
said precursor (303) comprises at least one word; and
if n, the number of candidate words retrieved is a threshold number of words greater than m, the number of words capable of being displayed on the display screen (200), then said processor (104) increases the size of the precursor (303) by one word, and selects a list of candidate words from said dictionary whose one or more word index matches the precursor (303).

11. A method for inputting text to be displayed on a display screen (200) capable of displaying m-words of data, comprising the steps:
initializing a precursor (303) to a predefined value;
receiving text input data and causing it to be displayed on the display screen (200);
providing a dictionary containing a plurality of entries, each said entry including a one or more word index, a candidate word and a pre-defined score;
selecting, from the dictionary, a list of n-number of candidate words whose one or more word index matches the precursor (303);
causing m-number of candidate words (302) from said list of candidate words to be displayed on said display screen (200); and
prompting the user to select one of the displayed candidate words (302) or enter data for identifying a desired word,
wherein the pre-defined score depends on the frequency of occurrence of the pair of one or more word index and candidate word in a text corpus,
wherein said candidate words (302) are displayed on the display screen (200) in an order corresponding to their respective score.

12. The method according to claim 11, comprising, in response to the selection of a candidate word, the steps:
updating the precursor (303) by appending the selected candidate word to the end of the precursor (303) and deleting the leading word;
selecting a new list of candidate words whose one or more word index matches the precursor (303); and
prompting the user to either select one of the displayed candidate words (302) or enter data for identifying a desired word.

13. The method according to any of claims 11 to 12, comprising updating periodically the score of selected said candidate words stored in said dictionary to reflect a frequency of usage.

14. The method according to any of claims 11 to 13, wherein if no match between at least one said one or more word index stored in said dictionary and said precursor is found, then a new entry in said dictionary in which said precursor (303) is the one or more word index and the candidate word is the entered word is created.

15. The method according to any of claims 11 to 14, wherein selected said candidate words from the selected list whose initial character(s) match the character(s) entered using a text entry device (100) are displayed.

16. A computer program for performing the method of inputting text according to any of claims 11-15.

## Patentansprüche

1. Vorrichtung, enthaltend
einen Anzeigebildschirm (200) zur Anzeige von m Datenwörtern;
eine Dateneingabeeinrichtung (100) zur Eingabe von Daten;
einen Prozessor (104), der von der Dateneingabeeinrichtung (100) Daten empfängt und deren Anzeige auf dem Anzeigebildschirm (200) veranlasst, wobei der Prozessor (104) bei der Aktivierung einen Precursor (303) auf einen vordefinierten Wert initialisiert;
einen nicht flüchtigen Speicher (120), der ein Wörterbuch speichert, welches eine Vielzahl von Einträgen enthält, wobei jeder Eintrag einen Index aus einem oder mehreren Wörtern, ein Kandidatenwort und eine vordefinierte Wertung umfasst;
wobei der Prozessor (104) eine Liste mit einer Anzahl von n Kandidatenwörtern aus dem Wörterbuch auswählt, deren Index aus einem oder mehreren Wörtern mit dem Precursor (303) übereinstimmt;
wobei der Prozessor (104) veranlasst, dass eine Anzahl von m Kandidatenwörtern (302) aus der Liste der Kandidatenwörter auf dem Anzeigebildschirm (200) angezeigt wird;
wobei der Prozessor (104) die Anzeige (200) veranlasst, den Benutzer zur Auswahl eines der angezeigten Kandidatenwörter (302) oder zur Eingabe von Daten zur Identifizierung eines gewünschten Wortes unter Verwendung der Dateneingabeeinrichtung (100) auffordert,
wobei die vordefinierte Wertung von der Häufigkeit abhängig ist, mit der das Paar aus Index aus einem oder mehreren Wörtern und Kandidatenwort in einem Textkörper vorkommt,
wobei die Kandidatenwörter (302) auf dem Anzeigebildschirm (100) in einer ihrer jeweiligen Wertung entsprechenden Reihenfolge angezeigt werden.

2. Vorrichtung nach Anspruch 1, bei welcher ansprechend auf die Auswahl eines Kandidatenwortes der Prozessor (104) den Precursor (303) aktualisiert, indem das ausgewählte Kandidatenwort ans Ende des Precursors (303) angehängt wird und das führende Wort gelöscht wird, eine neue Liste von Kandidatenwörtern (302) auswählt, deren Index aus einem oder mehreren Wörtern mit dem Precursor (303) übereinstimmt, und die Anzeige veranlasst, den Benutzer aufzufordern, entweder eines der angezeigten Kandidatenwörter (302) auszuwählen oder Daten zur Identifizierung eines gewünschten Wortes unter Verwendung der Dateneingabeeinrichtung (100) einzugeben.

3. Vorrichtung nach Anspruch 1 oder 2, bei welcher das Wörterbuch eine Wertung enthält, die mindestens ausgewählten der Vielzahl von Einträgen zugehörig ist; und wobei dann, wenn m, die Anzahl der Wörter, die auf dem Anzeigebildschirm (200) angezeigt werden können, kleiner als n, die Anzahl der abgerufenen Kandidatenwörter, ist, der Prozessor (104) veranlasst, dass eine Anzahl von m Kandidatenwörtern (302), welche die höchste Wertung aus der Liste von Kandidatenwörtern haben, auf dem Anzeigebildschirm (200) angezeigt wird.

4. Vorrichtung nach einem der Ansprüche 1-3, bei welcher:
der Precursor (303) mindestens ein Wort enthält; und
dann, wenn m, die Anzahl der Wörter, die auf dem Anzeigebildschirm (200) angezeigt werden können, größer ist als n, die Anzahl der abgerufenen Kandidatenwörter, der Prozessor veranlasst, dass eine Anzahl von n Kandidatenwörtern (302) aus der Liste von Kandidatenwörtern auf dem Anzeigebildschirm (200) angezeigt wird, und wenn der Precursor größer als oder gleich 2 ist, der Prozessor (104) das führende Wort von dem Precursor (303) löscht, eine ergänzende Liste von Kandidatenwörtern aus dem Wörterbuch auswählt, deren Index aus einem oder mehreren Wörtern mit dem Precursor (303) übereinstimmt, und eine Anzahl m-n der ergänzenden Kandidatenwörter, die auf dem Anzeigebildschirm (200) anzuzeigen sind, anzeigt.

5. Vorrichtung nach Anspruch 4, bei welcher das Wörterbuch eine Wertung enthält, die mindestens ausgewählten der Vielzahl von Einträgen zugehörig ist; und
wobei die Kandidatenwörter auf dem Anzeigebildschirm (200) in einer ihrer jeweiligen Wertung entsprechenden Reihenfolge angezeigt werden.

6. Vorrichtung nach einem der Ansprüche 1-5, bei welcher das Wörterbuch eine mindestens ausgewählten der Vielzahl von Einträgen zugehörige Wertung enthält und der Prozessor periodisch die Wertung von ausgewählten Kandidatenwörtern aktualisiert, die in dem nicht flüchtigen Speicher gespeichert sind, um eine Häufigkeit der Nutzung wiederzugeben.

7. Vorrichtung nach einem der Ansprüche 1-6, bei welcher dann, wenn der Prozessor (104) nicht in der Lage ist, eine Übereinstimmung zwischen mindestens einem in dem Wörterbuch gespeicherten Index aus einem oder mehreren Wörtern und dem Precursor (303) zu finden, der Prozessor (104) einen neuen Eintrag in dem Wörterbuch erzeugt, in welchem der Precursor (303) der Index aus einem oder mehreren Wörtern ist und das Kandidatenwort das unter Verwendung der Dateneingabeeinrichtung (100) eingegebene Wort ist.

8. Vorrichtung nach einem der Ansprüche 1-7, bei welcher der Prozessor (104) veranlasst, dass ausgewählte Kandidatenwörter (302) von der ausgewählten Liste angezeigt werden, bei welchen ein oder mehrere Anfangsbuchstaben dem bzw. den Buchstaben entsprechen, die unter Verwendung der Dateneingabeeinrichtung (100) eingegeben werden.

9. Vorrichtung nach einem der Ansprüche 1-8, bei welcher das Wörterbuch eine Wertung enthält, die mindestens ausgewählten der Vielzahl von Einträgen zugehörig ist; und
wobei der Prozessor (104) den Anzeigebildschirm (200) veranlasst, nur Kandidatenwörter anzuzeigen, deren Wertung einen Schwellenwert übersteigt.

10. Vorrichtung nach einem der Ansprüche 1-9, bei welcher:
der Precursor (303) mindestens ein Wort enthält; und
dann, wenn n, die Anzahl der abgerufenen Kandidatenwörter, eine Schwellenanzahl von Wörtern ist, die größer als m, die Anzahl der Wörter, die auf dem Anzeigebildschirm (200) angezeigt werden können, ist, der Prozessor (104) die Größe des Precursors (303) um ein Wort erhöht und eine Liste von Kandidatenwörtern aus dem Wörterbuch auswählt, deren Index aus einem oder mehreren Wörtern mit dem Precursor (303) übereinstimmt.

11. Verfahren zur Eingabe von Text, der auf einem Anzeigebildschirm (200) anzuzeigen ist, welcher in der Lage ist, m Datenwörter anzuzeigen, enthaltend die Schritte:
Initialisieren eines Precursors (303) auf einen vorbestimmten Wert;
Empfangen von Texteingabedaten und Veranlassen, dass sie auf dem Anzeigebildschirm (200) angezeigt werden;
Bereitstellen eines Wörterbuchs, welches eine Vielzahl von Einträgen enthält, wobei jeder Eintrag einen Index aus einem oder mehreren Wörtern, ein Kandidatenwort und eine vordefinierte Wertung umfasst;
Auswählen einer Liste mit einer Anzahl von n Kandidatenwörtern aus dem Wörterbuch, deren Index aus einem oder mehreren Wörtern mit dem Precursor (303) übereinstimmt;
Veranlassen, dass eine Anzahl von m Kandidatenwörtern (302) aus der Liste von Kandidatenwörtern auf dem Anzeigebildschirm (200) angezeigt wird; und
Auffordern des Benutzers, eines der angezeigten Kandidatenwörter (302) auszuwählen oder Daten zur Identifizierung eines gewünschten Wortes einzugeben,
wobei die vordefinierte Wertung von der Häufigkeit abhängig ist, mit der das Paar aus Index aus einem oder mehreren Wörtern und Kandidatenwort in einem Textkörper vorkommt,
wobei die Kandidatenwörter (302) auf dem Anzeigebildschirm (200) in einer Reihenfolge angezeigt werden, die ihrer jeweiligen Wertung entspricht.

12. Verfahren nach Anspruch 11, enthaltend die Schritte ansprechend auf die Auswahl eines Kandidatenwortes:
Aktualisieren des Precursors (303), indem das ausgewählte Kandidatenwort an das Ende des Precursors (303) angehängt wird und das führende Wort gelöscht wird;
Auswählen einer neuen Liste von Kandidatenwörtern, deren Index aus einem oder mehreren Wörtern mit dem Precursor (303) übereinstimmt; und
Auffordern des Benutzers, entweder eines der angezeigten Kandidatenwörter (302) auszuwählen oder Daten für die Identifizierung eines gewünschten Wortes einzugeben.

13. Verfahren nach einem der Ansprüche 11-12, enthaltend das periodische Aktualisieren der Wertung von ausgewählten Kandidatenwörtern, die in dem Wörterbuch gespeichert sind, um eine Häufigkeit der Benutzung wiederzugeben.

14. Verfahren nach einem der Ansprüche 11-13, bei welchem dann, wenn keine Übereinstimmung zwischen mindestens einem in dem Wörterbuch gespeicherten Index aus einem oder mehreren Wörtern und dem Precursor gefunden wird, ein neuer Eintrag in dem Wörterbuch erzeugt wird, bei welchem der Precursor (303) der Index aus einem oder mehreren Wörtern ist und das Kandidatenwort das eingegebene Wort ist.

15. Verfahren nach einem der Ansprüche 11-14, bei welchem die ausgewählten Kandidatenwörter aus der ausgewählten Liste angezeigt werden, bei welchen ein oder mehrere Anfangsbuchstaben mit dem bzw. den Buchstaben übereinstimmen, welche unter Verwendung einer Texteingabeeinrichtung (100) eingegeben werden.

16. Computerprogramm zur Ausführung des Verfahrens zur Eingabe von Text gemäß einem der Ansprüche 11-15.

## Revendications

1. Dispositif, comprenant :
un écran d'affichage (200) pour afficher m mots de données ;
un dispositif de saisie de données (100) pour saisir des données ;
un processeur (104) recevant des données du dispositif de saisie de données (100) et provoquant leur affichage sur l'écran d'affichage (200), dans lequel, à son activation, ledit processeur (104) initialise un précurseur (303) à une valeur prédéfinie ;
une mémoire non volatile (120) stockant un dictionnaire contenant une pluralité d'entrées, chaque dite entrée comprenant un ou plusieurs indices de mots, un mot candidat et un score prédéfini ;
ledit processeur (104) sélectionnant une liste d'un nombre n de mots candidats dans ledit dictionnaire dont le ou les indices de mots correspondent au précurseur (303) ;
ledit processeur (104) provoquant l'affichage d'un nombre m de mots candidats (302) de ladite liste de mots candidats sur ledit écran d'affichage (200) ;
ledit processeur (104) amenant l'affichage (200) à inviter l'utilisateur à sélectionner l'un des mots candidats affichés (302) ou à saisir des données pour identifier un mot souhaité en utilisant ledit dispositif de saisie de données (100),
dans lequel le score prédéfini dépend de la fréquence d'occurrence de la paire d'un ou plusieurs indices de mots et de mot candidat dans un corps de texte,
dans lequel lesdits mots candidats (302) sont affichés sur l'écran d'affichage (200) dans un ordre correspondant à leur score respectif.

2. Dispositif selon la revendication 1, dans lequel, en réponse à la sélection d'un mot candidat, ledit processeur (104) actualise le précurseur (303) en annexant le mot candidat sélectionné à la fin du précurseur (303) et en supprimant le mot de début, il sélectionne une nouvelle liste de mots candidats (302) dont un ou plusieurs indices de mots correspondent au précurseur (303) et il amène l'affichage à inviter l'utilisateur soit à sélectionner l'un des mots candidats affichés (302) soit à saisir des données pour identifier un mot souhaité en utilisant ledit dispositif de saisie de données (100).

3. Dispositif selon la revendication 1 ou 2, dans lequel ledit dictionnaire contient un score associé à au moins des saisies sélectionnées dans la pluralité de saisies ; et
dans lequel, si m, le nombre de mots capables d'être affichés sur l'écran d'affichage (200), est inférieur à n, le nombre de mots candidats extraits, alors ledit processeur (104) amène le nombre m de mots candidats (302) ayant le plus haut score dans la liste de mots candidats à s'afficher sur ledit écran d'affichage (200).

4. Dispositif selon l'une quelconque des revendications 1 à 3, dans lequel :
ledit précurseur (303) comprend au moins un mot ; et
si m, le nombre de mots capables d'être affichés sur l'écran d'affichage (200), est supérieur à n, le nombre de mots candidats extraits, alors ledit processeur amène le nombre n de mots candidats (302) de la liste de mots candidats à s'afficher sur ledit écran d'affichage (200), et si ledit précurseur est supérieur ou égal à 2 alors le processeur (104) supprime le mot de début du précurseur (303), il sélectionne une liste supplémentaire de mots candidats dudit dictionnaire dont un ou plusieurs indices de mots correspondent au précurseur (303), et il affiche le nombre m-n desdits mots candidats supplémentaires à afficher sur ledit écran d'affichage (200).

5. Dispositif selon la revendication 4, dans lequel ledit dictionnaire contient un score associé à au moins des saisies sélectionnées dans la pluralité de saisies ; et
dans lequel lesdits mots candidats sont affichés sur l'écran d'affichage (200) dans un ordre correspondant à leur score respectif.

6. Dispositif selon l'une quelconque des revendications 1 à 5, dans lequel ledit dictionnaire contient un score associé à au moins des saisies sélectionnées dans la pluralité de saisies, et ledit processeur actualise périodiquement le score desdits mots candidats sélectionnés stockés dans ladite mémoire non volatile pour refléter une fréquence d'utilisation.

7. Dispositif selon l'une quelconque des revendications 1 à 6, dans lequel, si ledit processeur (104) ne parvient pas à trouver une correspondance entre au moins un ou plusieurs indices de mots stockés dans ledit dictionnaire et ledit précurseur(303), alors ledit processeur (104) crée une nouvelle entrée dans ledit dictionnaire dans laquelle ledit précurseur (303) est le ou les indices de mots et le mot candidat est le mot saisi en utilisant ledit dispositif de saisie de données (100).

8. Dispositif selon l'une quelconque des revendications 1 à 7, dans lequel le processeur (104) provoque l'affichage desdits mots candidats (302) sélectionnés dans la liste sélectionnée dont le ou les caractères initiaux correspondent aux caractères saisis en utilisant ledit dispositif de saisie de données (100).

9. Dispositif selon l'une quelconque des revendications 1 à 8, dans lequel ledit dictionnaire contient un score associé à au moins des saisies sélectionnées dans la pluralité de saisies ; et
dans lequel ledit processeur (104) amène l'écran d'affichage (200) à n'afficher que des mots candidats dont le score dépasse une valeur de seuil.

10. Dispositif selon l'une quelconque des revendications 1 à 9, dans lequel :
ledit précurseur (303) comprend au moins un mot ; et
si n, le nombre de mots candidats extraits, est un nombre seuil de mots supérieur à m, le nombre de mots capables d'être affichés sur l'écran d'affichage (200), alors ledit processeur (104) augmente la taille du précurseur (303) d'un mot, et sélectionne une liste de mots candidats dans ledit dictionnaire dont un ou plusieurs indices de mots correspondent au précurseur (303).

11. Procédé de saisie de texte à afficher sur un écran d'affichage (200) capable d'afficher m mots de données, comprenant les étapes consistant à :
initialiser un précurseur (303) à une valeur prédéfinie ;
recevoir des données de saisie de texte et provoquer leur affichage sur l'écran d'affichage (200) ;
fournir un dictionnaire contenant une pluralité d'entrées, chaque dite entrée comprenant un ou plusieurs indices de mots, un mot candidat et un score prédéfini ;
sélectionner une liste d'un nombre n de mots candidats dans ledit dictionnaire dont le ou les indices de mots correspondent au précurseur (303) ;
provoquer l'affichage d'un nombre m de mots candidats (302) de ladite liste de mots candidats sur ledit écran d'affichage (200) ; et
inviter l'utilisateur à sélectionner l'un des mots candidats affichés (302) ou à saisir des données pour identifier un mot souhaité,
dans lequel le score prédéfini dépend de la fréquence d'occurrence de la paire d'un ou plusieurs indices de mots et de mot candidat dans un corps de texte,
dans lequel lesdits mots candidats (302) sont affichés sur l'écran d'affichage (200) dans un ordre correspondant à leur score respectif.

12. Procédé selon la revendication 11, comprenant, en réponse à la sélection d'un mot candidat, les étapes consistant à :
actualiser le précurseur (303) en annexant le mot candidat sélectionné à la fin du précurseur (303) et en supprimant le mot de début ;
sélectionner une nouvelle liste de mots candidats dont un ou plusieurs indices de mots correspondent au précurseur (303) ; et
inviter l'utilisateur soit à sélectionner l'un des mots candidats affichés (302) soit à saisir des données pour identifier un mot souhaité.

13. Procédé selon la revendication 11 ou 12, comprenant l'étape consistant à actualiser périodiquement le score desdits mots candidats sélectionnés stockés dans ledit dictionnaire pour refléter une fréquence d'utilisation.

14. Procédé selon l'une quelconque des revendications 11 à 13, dans lequel, en l'absence de correspondance entre au moins un ou plusieurs indices de mots stockés dans ledit dictionnaire et ledit précurseur, alors une nouvelle entrée est créée dans ledit dictionnaire dans laquelle ledit précurseur (303) est le ou les indices de mots et le mot candidat est le mot saisi.

15. Procédé selon l'une quelconque des revendications 11 à 14, dans lequel lesdits mots candidats sélectionnés dans la liste sélectionnée dont le(s) caractère(s) initial (initiaux) correspond(ent) au(x) caractère(s) saisi(s) en utilisant un dispositif de saisie de texte (100) sont affichés.

16. Programme informatique permettant de mettre en oeuvre le procédé de saisie de texte selon l'une quelconque des revendications 11 à 15.
